Europäisches Patentamt

European Patent Office

Office européen des brevets

(19)

(11) Veröffentlichungsnummer: **0 272 541**
A2

(12) **EUROPÄISCHE PATENTANMELDUNG**

(21) Anmeldenummer: 87118196.2

(22) Anmeldetag: 09.12.87

(51) Int. Cl.⁴: **C08L 25/02** , C08L 23/02 ,
C08K 3/04 , H01B 1/24 ,
//(C08L25/02,23:02,53:02),
(C08L23/02,25:02,53:02)

(30) Priorität: 17.12.86 DE 3643008

(43) Veröffentlichungstag der Anmeldung:
29.06.88 Patentblatt 88/26

(84) Benannte Vertragsstaaten:
BE DE FR GB NL

(71) Anmelder: **BASF Aktiengesellschaft**
**Carl-Bosch-Strasse 38**
**D-6700 Ludwigshafen(DE)**

(72) Erfinder: **Hoeni, Hans, Dr.**
**Hauptstrasse 69 a**
**D-6719 Obersulzen(DE)**
Erfinder: **Kress, Gerhard, Dr.**
**Liebermannstrasse 7**
**D-6700 Ludwigshafen(DE)**

(54) **Elektrisch leitende thermoplastische Formmasse, deren Herstellung und Verwendung.**

(57) Die Erfindung betrifft eine elektrisch leitende thermoplastische Formmasse, enthaltend, bezogen auf die Formmasse aus A, B und C

A 10 bis 95 Gew.% mindestens eines Styrol und/oder substituiertes Styrol enhaltenden Polymerisates,

B 5 bis 95 Gew.% mindestens eines Homo-oder Copolymerisates eines α-Olefinmonomeren,

B₁ ferner enthaltend Ruß.
    Sie ist dadurch gekennzeichnet, daß, bezogen auf die Komponente B, 2 bis 30 Gew.% Ruß vorhanden sind und die Formmasse zusätzlich

C 2 bis 20 Gew.% mindestens eines Styrol und Butadien oder Isopren enthaltenden Blockcopolymerisates aufweist.
    Diese Formmasse wird zur Herstellung von Formteilen verwendet.

EP 0 272 541 A2

## Elektrisch leitende thermoplastische Formmasse, deren Herstellung und Verwendung

Die Erfindung betrifft eine elektrisch leitende thermoplastische Formmasse, enthaltend

A 10 bis 95 Gew.% mindestens eines Styrol und/oder substituiertes Styrol enthaltenden Polymerisates

B 5 bis 95 Gew.% mindestens eines Homo-oder Copolymerisates eines $\alpha$-Olefinmonomeren,

B$_1$ ferner enthaltend Ruß.

Zum Stand der Technik nennen wir die US-PS 3 591 526.

Es sind bereits verschiedene thermoplastische Formmassen bekannt, die aufgrund ihres Gehalts an elektrisch leitfähigem Ruß eine ausreichende elektrische Leitfähigkeit besitzen, um Formkörper mit guten elektrischen Eigenschaften herstellen zu können. Diese Formmassen müssen jedoch einen sehr hohen Rußgehalt aufweisen, damit die aus ihnen hergestellten Formkörper die gewünschten elektrischen Eigenschaften erhalten. Ein derart hoher Rußanteil führt aber bei der Formmasse zu einer deutlich erhöhten Schmelzviskosität und zu verminderten mechanischen Eigenschaften.

Es sind aus der zitierten US-PS Mischungen unverträglicher Thermoplasten bekannt, wobei einem der beiden Thermoplasten vor dem Mischvorgang seinerseits Ruß zugemischt wurde. Die elektrische Leitfähigkeit und die mechanische Qualität solcher Mischungen lassen jedoch zu wünschen übrig.

Andererseits sind auch rußfreie Mischungen unverträglicher Thermoplasten bekannt (vgl. deutsche Patentanmeldung P 36 20 008.5, die einen Gehalt eines Mischungsvermittlers aufweisen und gute Schlagzähigkeiten besitzen.

Der Erfindung liegt die Aufgabe zugrunde, eine thermoplastische Formmasse aus primär unverträglichen Thermoplasten mit genügend niedrigem elektrischem Wiederstand und genügend hoher mechanischer Qualität herzustellen.

Diese Aufgabe wird gelöst durch eine Formasse gemäß Anspruch 1.

Die Erfindung betrifft daher eine elektrisch leitende thermoplastische Formmasse, enthaltend, bezogen auf A, B und C

A. 10 bis 95 Gew.% mindestens eines Styrol und/oder substituiertes Styrol enthaltenden Polymerisates

B. 5 bis 95 Gew.% mindestens eines Homo-oder Copolymerisates eines $\alpha$-Olefinmonomeren,

B$_1$ ferner enthaltend Ruß.

Sie ist dadurch gekennzeichnet, daß, bezogen auf die Komponente B, 2 bis 30 Gew.% Ruß vorhanden sind und die Formmasse zusätzlich

C. 2 bis 20 Gew.% mindestens eines Styrol und Butadien oder Isopren enthaltenden Blockcopolymerisates aufweist.

Nachstehend werden der Aufbau der erfindungsgemäßen Formmasse aus den Komponenten, die Herstellung der Komponenten und die der Formmasse beschrieben.

Die Formmasse enthält die Komponenten A, B, B$_1$ und C; vorzugsweise besteht sie aus diesen.

Ferner kann die Formmasse als Komponente D übliche Zusatzstoffe enthalten.

Bezogen auf die Formmasse aus A + B + C enthält sie:

A: 10 bis 95 Gew.%, vorzugsweise 20 bis 80 Gew.%, insbesondere 30 bis 75 Gew.%,

B: 5 bis 95 Gew.%, vorzugsweise 10 bis 70 Gew.%, insbesondere 15 bis 60 Gew.%,

C: 2 bis 20 Gew.%, vorzugsweise 5 bis 15 Gew.%.

Bezogen auf B enthält sie:

B$_1$: 2 bis 30 Gew.%, vorzugsweise weniger als 25 bis 10 Gew.%, insbesondere 15 bis 24 Gew.%.

Bezogen auf 100 Gewichtsteile A + B + B$_1$ + C, können noch zugegen sein

D: 0,05 bis 25 Gewichtsteile, insbesondere 0,1 bis 10 Gewichtsteile.

## Komponente A

Als Komponente A der erfindungsgemäßen Formmasse kommen Homopolymerisate oder Copolymerisate von Styrol mit einem der eng verwandten insbesondere methylsubstituierten Styrole in Frage, in denen ein Methylrest als Substituent am aromatischen Ring oder an der Seitenkette vorhanden ist. Hier ist vor allem p-Methylstyrol zu erwähnen. Diese Copolymerisate können aus Styrol bzw. substituiertem Styrol in an sich bekannter Weise hergestellt werden. Als Styrolpolymerisate kommer ferner Pfropfmischpolymerisate in Frage, die durch Polymerisation von Styrol oder substituiertem Styrol in Gegenwart eines Kautschuks, z.B. eines Butadienpolymerisates oder kautschukartigen Styrol-Butadien-Copolymerisats, hergestellt werden. Der Polybutadiengehalt kann 3 bis 20 Gew.%, vorzugsweise 5 bis 12 Gew.% betragen. Der Kautschukt liegt dabei fein dispergiert in einer als Hartmatrix bezeichneten Polystyrolphase vor. Die Herstellung derartiger - schlagfester Polystyrole ist dem Fachmann bekannt. Polystyrole und Polymerisate substitueirter Styrole sind, ebenso wie die schlagfesten Polystyrole, im Handel erhältlich. Die Viskositätszahl der Komponente A soll im Bereich von 60 bis 120 ml/g liegen.

Ferner seien genannt die Styrol und Acrylnitril enthaltenden Copolymerisate, wie SAN mit VZ von 70 bis 116, sowie die Pfropfcopolymerisate von Styrol und Acrylnitril auf Polybutadien (ABS). Alle diese Produkte sind im Handel erhältlich.

## Komponente B

Als Homo-und Copolymerisate von $\alpha$-Olefinmonomeren kommen die des Ethylens, Propylens und Isobutens in Frage. Es seien genannt Polyethylen von hoher Dichte (Bereich 0,94 bis 0,97 g/cm$^3$) mit Schmelzflußindices (gemessen BS 2782, Teil 105 C) von 0,001 bis 2,0 dg/Minute oder die Copolymerisate von Ethylen und geringen Mengen (ca. 10 %) Propylen. Ferner die Polyisobutene mit Molekulargewichten von 1000 bis 15 000 (Zahlenmittel). Die Herstellung derartiger Produkte ist bekannt.

Bevorzugt werden ausschließlich jedoch die isotaktischen Polypropylene angewendet, die nach dem Gasphasenverfahren der unter Verwendung von Ziegler-Natta-Katalysatoren hergestellt werden und die Schmelzindices im Bereich von 0,1 bis 90,0 g/10 Min. (MFI 190/5) aufweisen können. Besonders bevorzugt sind dabei solche Produkte, deren ataktischer Anteil zwischen 0,1 und 20 Gew.% liegt (gemessen als xylollöslicher Anteil unter Standardbedingungen).

## Komponente B$_1$

Als Ruß im Sinne der vorliegenden Erfindung soll mikrokristalliner, feinteiliger Kohlenstoff verstanden werden (vgl. Kunststoff Lexikon, 7. Aufl. 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von 0,01 bis 0,1 $\mu$m und die Oberflächen im Bereich von 10$^2$ bis 10$^4$ m$^2$/g (BET/ASTM D 3037) bei DBP-Absorptionen von 10$^2$ bis 10$^3$ ml/100 g (ASTM D 2414).

## Komponente C

Die Komponente C stellt mindestens ein Styrol-und Butadien-oder Isopren enthaltendes Blockcopolymerisat dar. Dies kann selektiv hydriert sein, so daß die vom Dien stammenden Doppelbindungen zu mehr als 90 % abgesättigt sind. Diese Blockcopolymerisate können durch lineare Zweiblockcopolymerisate oder deren Kopplungsprodukte, die sternförmig verzweigten Blockcopolymerisate, repräsentiert werden, wobei letztere mono-oder polymodal aufgebaut sein können.

Besonders geeignet sind Blockcopolymerisate aus der Gruppe der linearen Butadien-Styrol-Zwei-Blockcopolymerisate mit verschmiertem Übergang, der linearen Isopren-Styrol-Zweiblockcopolymerisate und der radialen Butadien-Styrol-Blockcopolymeren, wobei diese 60 bis 35 Gew.% Styrol (Rest Dien) bei Gesamtmolekulargewichten im Bereich von 40 000 bis 250 000 enthalten.

Die Komponente C stellt insbesondere auch ein lineares aus Styrol und Butadien bestehendes Blockcopolymerisat mit verschmiertem Übergang dar, das in an sich bekannter Weise selektiv hydriert worden ist, wobei lediglich die vom Monomerenbaustein Butadien herrührenden Doppelbindungen zu mehr

3

als 90 %, insbesondere zu mehr als 97 % abgesättigt werden. Derartige Verfahren zur Hydrierung sind an sich bekannt und können z.B. nach dem in der DE-OS 27 48 884 beschriebenen Verfahren durchgeführt werden.

Wesentlich für den Aufbau des in Rede stehenden Blockcopolymerisates vor der Hydrierung ist, daß der Gesamtstyrolgehalt des Blockcopolymerisates im Bereich von 40 bis 60 Gew.%, vorzugsweise 50 bis 55 Gew.%, bezogen auf C, liegt und daß 5 bis 25 Gew.% des Blockcopolymerisates C als Blockpolystyrol vorliegen und der Rest des Styrols in 60 bis 40 Gew.%, vorzugsweise 50 bis 45 Gew.% Butadien statistisch eingebaut vorliegt, wobei das Blockcopolymerisat C ein mittleres Molekulargewicht (Gewichtsmittel) von 50 000 bis 200 000, vorzugsweise 75 000 bis 150 000, aufweist.

Die Herstellung derartiger Blockcopolymerisate ist an sich bekannt und erfolgt durch anionische Polymerisation von Mischungen aus Butadien und Styrol in Gegenwart von Li-alkylinitiatoren und von allerdings nur geringen Mengen an THF (am besten ohne THF). Sie können z.B. nach dem in der DE-OS 31 06 959 beschriebenen Verfahren hergestellt werden, wobei insbesondere adiabatisch in einer Verfahrensstufe gearbeitet wird (Beispiel 2).

Komponente D

Die erfindungsgemäße Formmasse kann als Komponente D Zusatzstoffe enthalten, die für die Komponenten A, B, B₁ und C typisch und gebräuchlich sind. Als solche Zusatzstoffe seien beispielsweise genannt: Füllstoffe, Farbstoffe, Pigmente, Antistatika, Antioxidantien, auch Flammschutzmittel und insbesondere die Schmiermittel, die für die Weiterverarbeitung der Formmasse, z.B. bei der Herstellung von Formkörpern bzw. Formteilen erforderlich sind.

Herstellung der Formmasse

Die Herstellung der Formmasse erfolgt durch Mischen der Komponenten A, B, B₁, C und gegebenenfalls D nach allen bekannten Methoden, wobei jedoch zunächst die Komponenten B und B₁ vorgemischt werden. Hierfür kommen Buss-Kneter, Brabender, ZSK, Extruder, Walzaggregate u.ä. in Frage.

Die in der vorliegenden Anmeldung beschriebenen Parameter werden wie folgt bestimmt:

1. Lochkerbschlagzähigkeit, LKSZ, in kJ/m² nach DIN 53 753.
2. Spezifischer Durchgangswiderstand, R, in Ω cm nach DIN 53 482.

Für die Herstellung erfindungsgemäßer Formmassen und die von Vergleichsproben wurden die nachfolgend beschriebenen Produkte verwendet:

Komponente A

A. Ein schlagfestes Polystyrol mit einem Polybutadiengehalt von 7,5 Gew.%, mittlere Teilchengröße der Weichphase 2,7 µm (Mittelwert: 50 Volumenprozent der als Weichphase vorliegenden Kautschukartikel liegen oberhalb dieses Wertes und 50 Volumenprozent unterhalb dieses Wertes), enthaltend 0,1 Gew.% eines sterisch gehinderten Phenols als Antioxidans und 6,9 Gew.% Weißöl als Schmiermittel, VZ der Hartmatrix 70 ml/g.

Komponente B

B. Eine Mischung aus
20 Gew.% Ruß PRINTEX XE2 (Degussa)
BET-Oberfläche (ASTM D 3037): 1000 m²/g
DBP Absorption (ASTM D 2414): 370 ml/100 g

80 Gew.% ein nach dem BASF-Gasphasenverfahren hergestelltes Polypropylen mit dem MFI (190/5) von 12 g/10 min. und einem in Xylol bestimmten ataktischen Anteil von 16 Gew.%.

Die Mischung aus Ruß und dem PP wurde auf einem Buss-Kneter bei 200°C hergestellt.

Komponente C

$C_1$. Ein selektiv hydriertes Styrol-Butadien-Blockcopolymerisat mit einem Gesamtstyrolgehalt von 53 Gew.% (Rest 47 Gew.% Butadien). Diese 53 Gew.% sind aufgeteilt in 10 Gew.% in Form von Blockpolystyrol und in 43 Gew.% in oben genannten 47 Gew.% Butadien statistisch verteilt; MG = 100 000.

$C_2$. Ein im Handel erhältliches selektiv hydriertes Styrol-Isopren-Zweiblockcopolymerisat mit einem Gesamtstyrolgehalt von 37 Gew.%, MG = 140 000 (Kraton® GX 1701).

$C_3$. Ein im Handel erhältliches SB-Sternblockcopolymerisat mit einem Gesamtstyrolgehalt von 40 Gew.%; MG = 150 000 (Finaprene® 414).

Die Erfindung wird durch die nachfolgenden Beispiele und Vergleichsversuche näher erläutert. Die darin genannten Teile und Prozente beziehen sich, sofern nicht anders angegeben, auf das Gewicht.

Beispiele 1 bis 6 und Vergleichsversuch

Es wurden Mischungen in den in Tabelle 1 angegebenen Zusammensetzungen auf einem Weber-Extruder unter den nachfolgenden Bedingungen hergestellt:

Schnecke mit Mischtorpedo
2-Strangdüse
70 UPM
Kunststofftemperatur: 190°C
2 × konfektioniert

In der Tabelle sind auch die an gespritzten Prüfkörpern gemessenen Lochkerbschlagzähigkeiten (LKSZ), und die an gepreßten Prüfkörpern gemessenen Werte spezifischen Durchgangswiderstände (R) wiedergegeben.

Tabelle

| Beispiel | 1 | 2 | 3 | 4 | 5 | 6 | Vergleichsversuch |
|---|---|---|---|---|---|---|---|
| Komp. A | 75 | 75 | 75 | 60 | 45 | 30 | 75 |
| B | 15 | 15 | 15 | 30 | 45 | 60 | 15 |
| $C_1$ | 10 | 0 | 0 | 10 | 10 | 10 | 0 |
| $C_2$ | 0 | 10 | 0 | 0 | 0 | 0 | 0 |
| $C_3$ | 0 | 0 | 10 | 0 | 0 | 0 | 0 |
| LKSZ $(kJ/m^2)$ | 26,2 | 27,4 | 32,9 | 18,7 | 13,5 | 10,6 | 8,5 |
| R $(\Omega\ cm)$ | $1,1.10^2$ | $2,2.10^2$ | $2,0.10^2$ | 8,8 | 1,5 | 0,7 | $3,2.10^3$ |

Den Werten der Tabelle ist zu entnehmen, daß bei Fehlen der Komponente C nicht nur die mechanische Qualität, sondern auch die elektrische Leitfähigkeit der Produkte verschlechtert wird. Demgegenüber zeigen die beanspruchten Formmassen zufriedenstellende mechanische Qualität und gute elektrische Leitfähigkeit.

## Ansprüche

1. Elektrisch leitende thermoplastische Formmasse, enthaltend, bezogen auf die Formmasse aus A, B und C

A 10 bis 95 Gew.% mindestens eines Styrol und/oder substituiertes Styrol enhaltenden Polymerisates,

B 5 bis 95 Gew.% mindestens eines Homo-oder Copolymerisates eines α-Olefinmonomeren,

B₁ ferner enthaltend Ruß,

dadurch gekennzeichnet, daß, bezogen auf die Komponente B, 2 bis 30 Gew.% Ruß vorhanden sind und die Formmasse zusätzlich

C 2 bis 20 Gew.% mindestens eines Styrol und Butadien oder Isopren enthaltenden Blockcopolymerisates aufweist.

2. Elektrisch leitende thermoplastische Formmasse, bestehend aus den Komponenten A, B, B₁ und C.

3. Formmasse nach Anspruch 1, enthaltend zusätzlich übliche Zusatzstoffe D in üblichen Mengen.

4. Elektrisch leitende thermoplastische Formmasse, enthaltend, bezogen auf die Formmasse aus A, B und C

A 20 bis 80 Gew.% mindestens eines Styrol und/oder substituiertes Styrol enthaltenden Polymerisates,

B 10 bis 70 Gew.% mindestens eines Homo-oder Copolymerisates eines α-Olefinmonomeren,

B₁ ferner enthaltend Ruß,

dadurch gekennzeichnet, daß, bezogen auf die Komponente B, 2 bis 30 Gew.% Ruß vorhanden sind und die Formmasse zusätzlich

C 2 bis 20 Gew.% mindestens eines Styrol und Butadien oder Isopren enthaltenden Blockcopolymerisates aufweist.

5. Elektrisch leitende thermoplastische Formmasse, enthaltend, bezogen auf die Formmasse aus A, B und C

A 20 bis 80 Gew.% mindestens eines Styrol und/oder substituiertes Styrol enthaltenden Polymerisates,

B 10 bis 70 Gew.% mindestens eines Homo-oder Copolymerisates eines α-Olefinmonomeren,

B₁ ferner enthaltend Ruß,

dadurch gekennzeichnet, daß, bezogen auf die Komponente B, 10 bis weniger als 25 Gew.% Ruß vorhanden sind und die Formmasse zusätzlich

C 5 bis 15 Gew.% mindestens eines Styrol und Butadien cder Isopren enthaltenden Blockcopolymerisates aufweist.

6. Elektrisch leitende thermoplastische Formmasse, enthaltend, bezogen auf die Formmasse aus A, B und C

A 30 bis 75 Gew.% mindestens eines Styrol und/oder substituiertes Styrol enthaltenden Polymerisates,

B 15 bis 60 Gew.% mindestens eines Homo-oder Copolymerisates eines α-Olefinmonomeren,

B₁ ferner enthaltend Ruß,

dadurch gekennzeichnet, daß, bezogen auf die Komponente B, 15 bis 24 Gew.% Ruß vorhanden sind und die Formmasse zusätzlich

C 5 bis 15 Gew.% mindestens eines Styrol und Butadien oder Isopren enthaltenden Blockcopolymerisates aus der Gruppe der linearen Butadien-Styrol-Zweiblockcopolymerisate mit verschmiertem Übergang, der linearen Isopren-Styrol-Zweiblockcopolymerisate und der radialen Butadien-Styrol-Blockcopolymerisate aufweist, wobei diese 60 bis 35 Gew.% Styrol (Rest Dien) bei Gesamtmolekulargewichten im Bereich von 40 000 bis 250 000 enthalten.

7. Verfahren zur Herstellung einer Formmasse gemäß Anspruch 1 durch Mischen der Bestandteile der Formmasse, dadurch gekennzeichnet, daß zunächst die Komponente $B_1$ in die Komponente B eingemischt wird und danach die so erhaltene Mischung mit dem (Co)Polymerisat A und der Komponente C gemischt wird.

8. Verwendung der Formmasse gemäß Anspruch 1 zur Herstellung von Formteilen.

9. Formteile aus Formmassen gemäß Anspruch 1.

7